# EUROPEAN PATENT APPLICATION

(11) **EP 2 099 003 A1**
(43) Date of publication of application: **09.09.2009**
(21) Application number: 08290220.6
(22) Date of filing: 06.03.2008
(51) Int. Cl.: G07G 5/00, G07G 1/12, G06Q 20/00

(54) **A transaction method with enhanced payment receipt delivery**

(71) Applicant: Gemalto SA, 92190 Meudon (FR)
(72) Inventor: Grenier, Fabrice c/o Axalto SA, 92197 Meudon Cedex (FR); Larduinat, Xavier c/o Axalto SA, 92197 Meudon Cedex (FR)
(74) Representative: Jacquot, Ludovic R. G.

(57) **Abstract**

The invention relates to a transaction method comprising the use of a point-of-sale terminal, a payment token such as a credit card, said payment token being adapted for being associated with the point-of-sale terminal for performing a payment, the method being **characterized in that** the method comprises the step which consists in sending from the point-of-sale terminal a payment information to a user-owned displaying and recording equipment (B), said step comprising signalizing the user-owned displaying and recording equipment to the point-of-sale terminal (C2).

## Description

The invention relates to point-of-sales ("POS") terminals, i.e. payment terminals used by merchants for payments of goods by means of a payment token associated momentarily with such payment terminal. The payment token is typically a credit card.

"Point-Of-Sales" Terminal manufacturers implement a printer in their devices, to provide a ticket receipt to the cardholder after a transaction. This printer is a cost.

Some terminals already do not include a printer in retail environment, but in this case the terminal sends the printing receipt to the Cash register printers, thanks to a wired link (Ethernet, USB or RS232) - Those terminals are also named Retail PinPad.

Some of the newly deployed terminals, and this trend is continuously growing, include Ethernet or GPRS, allowing to send information over IP networks.

Banks providing the POS terminals free of charge to the merchant are very reluctant to pay a good price for the terminal. Consequently they look for cheaper terminals. Specifically, banks wonder the issue of the management of paper rolls, especially when the usable paper rolls have different diameters which particularly increases the cost of the terminal.

The aim of the invention is to allow the use of a point-of-sales terminal without any need for a printed receipt.

This aim is achieved by means of the invention as recited in the appended claims.

Other purposes, aspects and benefits of the invention will appear throughout the following description, which is made in reference to the appended drawings, among which :
- figure 1 is a flow-chart illustrating a transaction method according to one embodiment of the invention.
- figure 2 is a flow-chart illustrating a transaction method according to another embodiment of the invention.

A first embodiment will now be described. When purchasing a good or a service, the cardholder initiates a financial transaction through use of his card. The way the "electronic" payment is made with a POS terminal can be of any type, such as use of the chip of the smart card, of the magnetic stripe of the smart card, or of some contactless equipment of the smart card, i.e. near-field antenna and associated radiating electronics of the smart card for near-field communication.

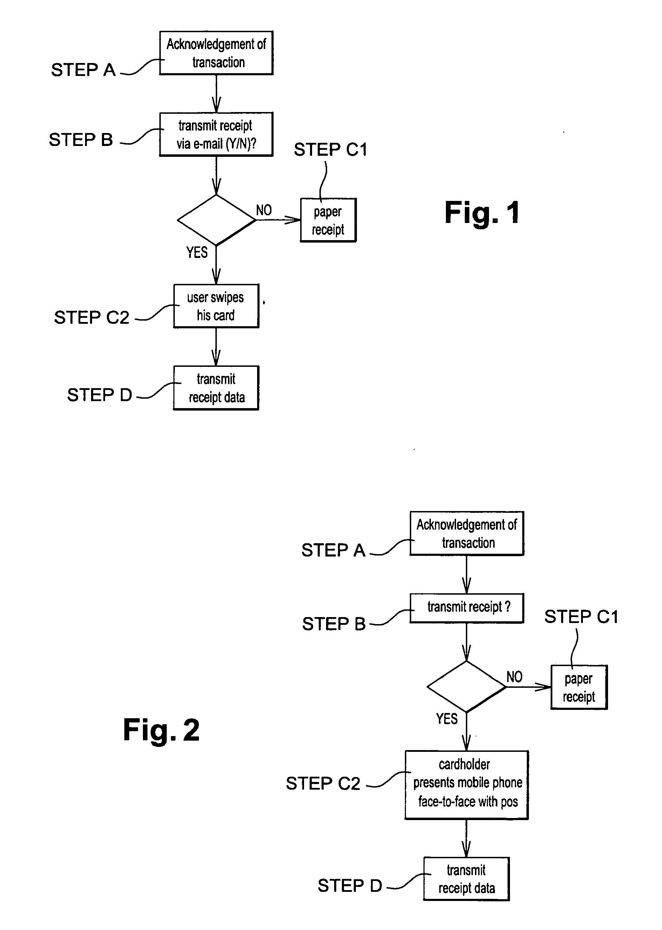

After acknowledgement of the transaction on the screen of the POS terminal, referenced as step A on figure 1, instead of printing a ticket, the POS terminal displays a message "Transmit receipt via email (Y/N)". This second step is referenced as step B on figure 1.

If the cardholder presses the "cancel" button, a paper receipt is delivered by the POS terminal, under step C1 on figure 1. Of course, in an alternative the POS terminal has no printer and hence only a transmission of the receipt is possible.

If the cardholder wishes to receive that receipt, he presses the "OK" button of the terminal, and swipes or inserts his card into the POS terminal as step C2.

The card holds an electronic address associated to or accessible from a remote communication equipment owned by the cardholder. The remote communication equipment is for example a personal computer of the cardholder, which may be located at the home of the cardholder. In such case, the electronic address is preferably an e-mail address of an e-mail account accessible from such home-based personal computer.

Thanks to signalization of the user-owned communication equipment to the POS terminal by means of the e-mail address accessible by such communication equipment, the payment receipt is transmitted by email to the cardholder email account, referenced as step D on figure 1. This allows the user to receive an electronic receipt, while allowing the merchant to avoid managing expensive paper rolls.

In communications theories, signalization of a communicating entity consists in giving to another entity control informations about the state of a communication between the two entities. These control informations may consist in an identifier associated with one of the entities or information about the state of the communication link between the entities. In the present example, an e-mail address is logically associated with a terminal that, although potentially variable physically, is at the end considered as owned by the user because personal to such user.

When back home, the cardholder downloads or simply reads his received emails and he can see the ticket receipt of the transaction.

The benefit of this solution is to go paperless, to keep (and file) an electronic version of the transaction while the paper version's life time is usually very short (it gets erased within 2 or 3 years).

In an alternate embodiment, such features are used to get warned when a malicious usage of the card is done or for being warned of the usage of the card made by a cardholder who is in close relationship with the owner of the warned terminal.

For example, in a specific case of the present embodiment, the electronic address stored in the card is an electronic address of the parents of the cardholder. This way, a parental alert is performed whenever the child or any other dependant uses his/her credit card. This way, certain types of credit card for 16 to 18 years old teenagers may be configured to deliver alerts to parents for each transaction.

The card may get physically personalized in factory or post-personalized Over-the-Air, with the e-mail address or SMS address (phone number) of the card holder, stored either in the memory of the smart card or on the magnetic stripe of the smart card.

Like this, at the end of transaction, the POS terminal does not need to print a ticket but proposes to transmit this receipt to the cardholder e-mail account thanks to the information contained in the card and then in the POS communication means.

The POS terminal may be programmed for sending the receipt data automatically without asking the cardholder about such service, after detection of the presence of the electronic address in the card.

Thanks to the described embodiment a new web service is offered that the bank can deploy as part as its online banking portal, where a media is set for alerts for certain usages of the customer card. As described, the media for alert can be SMS, by providing the cell phone number of the mobile phone owned by the cardholder or of the mobile phone of a person in close relationship to him. The media can be e-mail as described above, by providing an e-mail address, or can be regular mail, by providing a mailing address. The media can also be a phone number in order for the user to get a voice message on an interactive voice recorder. In such case, the user receives an alert message on his mobile phone thanks to the phone number of the mobile phone as indicated to the POS terminal. The alert message indicates the user that he has received such voice message, and the user consults the voice message by calling and interacting with the IVR - interactive voice recorder - so as to reach such voice message.

In another embodiment, the cardholder owns a mobile phone which is contactless enabled, i.e. a mobile phone which is equipped with an antenna and associated modulating/demodulating components for radiating and collecting near-field communication radiations. The POS terminal is also equipped with antenna and associated collecting and radiating circuit for performing contactless communication.

When purchasing a good or a service, the cardholder initiates a corresponding financial transaction with his card.

The way the "electronic" payment is made with a POS terminal can be of any type, such as use of the chip of the smart card, of the magnetic stripe of the smart card, or of some contactless equipment of the smart card, i.e. near-field antenna and associated radiating electronics of the smart card for near-field communication.

After acknowledgement of the transaction, referenced as step A on figure 2, instead of printing a ticket, the POS terminal displays a message "Transmit receipt (Y/N)", referenced as step B on figure 2. Of course, the POS terminal may have no printer and hence only a transmission of the receipt may be proposed in such case.

If the cardholder wishes to receive a receipt, he presses the "OK" button of the terminal, and presents its mobile phone face-to-face with the POS terminal, as referenced under reference step C2 on figure 2. Pressing the OK button and placing the mobile phone in the near-field area of the POS terminal allows to signalize the mobile phone to the POS terminal.

The mobile phone may have an identifier used in the subsequent near-field communication, which identifier is transferred to the POS terminal when the mobile phone is approached to the POS terminal.

The POS terminal may identify presence of the mobile phone after transmission of the payment receipt data to the mobile phone, which means at least part of the signalization is made after transmission in such case. Such a presence declaration message consists at the same time in an acknowledgement of receipt of the payment receipt data, which acknowledgement informs simultaneously the POS terminal that it does not need to send the payment receipt data again as it has been duly received already.

In the presently described embodiment, the cardholder signalizes his receiving terminal, i.e. his mobile phone, to the POS terminal by presenting physically the mobile phone face-to-face with the POS terminal. Detection of the presence of the mobile phone consists here in getting a presence message from the mobile phone when the mobile phone gets into near field area of the POS terminal.

Then the contactless communication begins between the POS terminal and the mobile phone, where the communication carries the payment receipt data from POS terminal to mobile phone. This step is referenced as step D on figure 2. The receipt is transmitted by contactless from the POS terminal to the mobile phone, here as an SMS over the near-field communication channel, the phone number of the mobile phone having been transferred to the POS terminal at step C2 when the cardholder presented his mobile phone face-to-face with the POS terminal.

The cardholder can then see the ticket receipt of this transaction on his mobile phone.

## Claims

1. A transaction method comprising the use of a point-of-sale terminal, a payment token such as a credit card, said payment token being adapted for being associated with the point-of-sale terminal for performing a payment, the method being **characterized in that** the method comprises the step which consists in sending from the point-of-sale terminal a payment information to a user-owned displaying and recording equipment (B), said step comprising signalizing the user-owned displaying and recording equipment to the point-of-sale terminal (C2).

2. The transaction method according to claim 1, **characterized in that** the signalizing of the user-owned displaying and recording equipment to the point-of-sale terminal consists in transferring address data associated with the user-owned displaying and recording equipment to the point-of-sale terminal (C2).

3. The transaction method according to claim 1, **characterized in that** the signalizing of the user-owned displaying and recording equipment to the point-of-sale terminal consists in approaching the user-owned displaying and recording equipment to the point-of-sale terminal so that the point-of-sale terminal detects presence of the user-owned displaying and recording equipment by near-field communication with such user-owned displaying and recording equipment (C2).

4. The transaction method according to claim 2, **characterized in that** the transferring of address data of the user-owned displaying and recording equipment to the point-of-sale terminal consists in associating with the point-of-sales terminal a payment token which holds the address data in a memorizing component thereof (C2).

5. The transaction method according to the preceding claim, **characterized in that** the payment token is a credit card equipped with a magnetic stripe, and the memorizing component which holds the electronic address consists in the magnetic stripe.

6. The transaction method according to claim 4, **characterized in that** the payment token is a credit card comprising a microprocessor and a memory associated with said microprocessor, and the memorizing component which holds the electronic address consists in the microprocessor-associated memory of the credit card.

7. The transaction method according to anyone of claims 2, 4 to 6, **characterized in that** the electronic address consists in an e-mail address of the user-owned displaying and recording equipment.

8. The transaction method according to anyone of claims 2, 4 to 6, **characterized in that** the electronic address consists in a phone number of the user-owned displaying and recording equipment.

9. The transaction method according to anyone of claims 2, 4, and 6, **characterized in that** the payment token is owned by a user who is different from a person using the payment token and the method comprises the monitoring step which consists in the owner of the payment token making use of his user-owned displaying and recording equipment for being informed.

10. The transaction method according to claim 3, **characterized in that** the user-owned displaying and recording equipment is a near-field-communication enabled mobile phone.
